# EUROPEAN PATENT SPECIFICATION

(11) **EP 3 165 348 B1**
(45) Date of publication and mention of the grant of the patent: **24.04.2019**
(21) Application number: 16197164.3
(22) Date of filing: 03.11.2016
(51) Int. Cl.: B29C 65/34

(54) **METHOD FOR THE MANUFACTURING OF A SOUND-ABSORBING PRODUCT**
VERFAHREN ZUR HERSTELLUNG EINES SCHALLABSORBIERENDEN PRODUKTS
PROCÉDÉS DE FABRICATION D'UN PRODUIT D'ISOLATION PHONIQUE

(30) Priority: 04.11.2015 SE 1551428
(43) Date of publication of application: 10.05.2017
(73) Proprietor: Margret Gardinkonfektion Aktiebolag, 511 24 Kinna (SE)
(72) Inventor: Gustavsson, Bo, 568 93 Skillingaryd (SE); Svensson, Inge, 291 94 Kristianstad (SE)
(74) Representative: Ström & Gulliksson AB

(56) References cited:
- EP-A1- 2 388 135
- US-A- 5 793 024
- US-A1- 2012 291 948

## Description

### TECHNICAL FIELD

The present invention relates to an improved manufacturing method for a panel having sound absorption properties, wherein panels manufactured by the method can be used in or as sound-absorbing products.

### BACKGROUND

It is becoming increasingly popular for companies and public buildings such as libraries, airports etc., to have an open space concept. In order to reduce the increased level of noise, some kind of noise reduction is required. There are many different kinds of known sound-absorbing products, for example in the form of interior space dividers and panels to be put in the ceiling, wall or floor during construction. These panels may for example be constructed by wood, paper board, metal, felt material and/or bonding materials.

Sound-absorbing panels are often manufactured by the use of two separate sheets of sound-absorbing material which are first heated up to a desired temperature, and the two sheets and an outer frame are then pressed together in a mold in order to form a unity. This manufacturing process has several drawbacks.

The step of pressing the sheets and frame together in a mold requires expensive equipment due to the very high pressure needed. Additionally, the process has a high energy consumption which is undesirable at least due to the high costs involved and the big environmental impact.

It is furthermore a very sensitive process, since it is crucial not to destroy the sound-absorbing qualities of the material during the heating process. If the sheets are in the heating oven for too long, or the temperature is too high, the material will be rendered useless.

A prior art solution relating to the process of bonding operations for joining thermoplastic composites is described in US-patent 5,793,024.

US 5 793 024 discloses a bonding process that is especially beneficial for joining thermoplastic composites, but it also can be used with metals or thermosets. US 2012/291948 discloses an apparatus with a magnetic induction coil that encircles at least one tooling surface of a thermoplastic welding tool. There is thus a need for an improved manufacturing process for sound-absorbing products which is less expensive, more flexible and user-friendly.

### SUMMARY

An object of the present invention is to provide an improved manufacturing method for a sound-absorbing panel, wherein the panel can be used in different sound-absorbing products.

According to a first aspect, a method for manufacturing a sound-absorbing panel is provided. The method comprises the steps of providing a first sheet and a second sheet of a nonwoven material having a melting temperature, providing a rigid structure in the form of a frame-like structure made of metal, heating only the rigid structure to a temperature above the melting temperature of the nonwoven material of the two sheets. The method further comprises placing the rigid structure between the first and the second sheet, wherein the material of the first and second sheets proximate to the rigid structure will melt by heat transfer from the rigid structure so that a unit is formed comprising the first sheet, the second sheet and the rigid structure and compressing the unit.

This manufacturing method is less sensitive than prior art since only the rigid structure is directly heated. This prevents the operator from destroying the material in the sheets by heating it to a high temperature, instead only the rigid structure is heated and the heat is then transferred to the sheets in order to make them melt locally into a unit with the rigid structure.

The method may further comprise, in the step of providing a first and a second sheet, applying a bonding layer onto at least one portion of a surface, which is intended to be faced towards the rigid structure, of the first and/or second sheet. This further increases the bonding between the two sheets and the rigid structure, and thus increases the durability of the sound-absorbing panel.

The rigid structure may be heated in a heating device for a time to a temperature of approximately 160 °C to 180 °C. The compression of the unit may be made by a compression device according to the teachings herein.

The method may further comprise, after the unit has been compressed, using the rigid structure for fastening a cover fabric by clamping. The rigid structure may comprise a base member and a rail member that are interlockable, so that a cover fabric may be clamped in place by folding the cover fabric into the base member and then anchoring the base member to the rail member.

The method may further comprise, after the unit has been compressed, connecting the sound-absorbing panel to a second sound-absorbing panel by connecting means arranged in the rigid structure. The rigid structure may comprise means for connecting the panel to a plurality of panels.

The rigid structure may comprise hollow members which are capable of receiving electrical cords. The rigid structure is a metal structure.

The nonwoven material may be a fabric comprising bicomponent fibers. The nonwoven material may be a fabric comprising polyethylene terephthalate (PET) fibers.

According to a second aspect, a sound-absorbing product is provided. The sound-absorbing product comprises at least one sound-absorbing panel made by the method of manufacturing as described above, wherein the at least one sound absorbing panel comprises a unit formed by a first sheet, a second sheet and a rigid structure, wherein the rigid structure is in the form of a frame-like structure made of metal and the first sheet and the second sheet are of a nonwoven material having a melting temperature, wherein melted fibers of the first and second sheets form a bonding film which joins the rigid structure and the sheets into a unity.

The product may be any of a piece of furniture, a sound-absorbing partition panel, a sound-absorbing wall panel, a sound-absorbing table panel, a sound-absorbing ceiling panel or a sound-absorbing panel system.

The product may comprise at least two sound-absorbing panels which are connected to each other by connecting means arranged in the rigid structure of each panel.

### BRIEF DESCRIPTION OF THE DRAWINGS

Embodiments of the invention will be described in the following; reference being made to the appended drawings which illustrate non-limiting examples of how the inventive concept can be reduced into practice.
Figs. 1a-c are schematic views of a sound-absorbing panel, wherein Fig. 1a is view showing the main components of the panel, Fig. 1b shows an isometric view of the panel in its assembled form and Fig. 1c shows a side view of the panel in its assembled form;
Figs. 2a-c are isometric views of a rigid structure and connecting means;
Figs. 3a-b are schematic block-diagrams of a method of manufacturing a sound-absorbing panel;
Figs. 4a-b are isometric views of sound-absorbing products comprising a single panel;
Figs. 5a-c are isometric views of sound-absorbing products where a plurality of panels are assembled to produce the product; and
Figs. 6a-b are schematic isometric views of embodiments of a compression device.

### DETAILED DESCRIPTION OF EMBODIMENTS

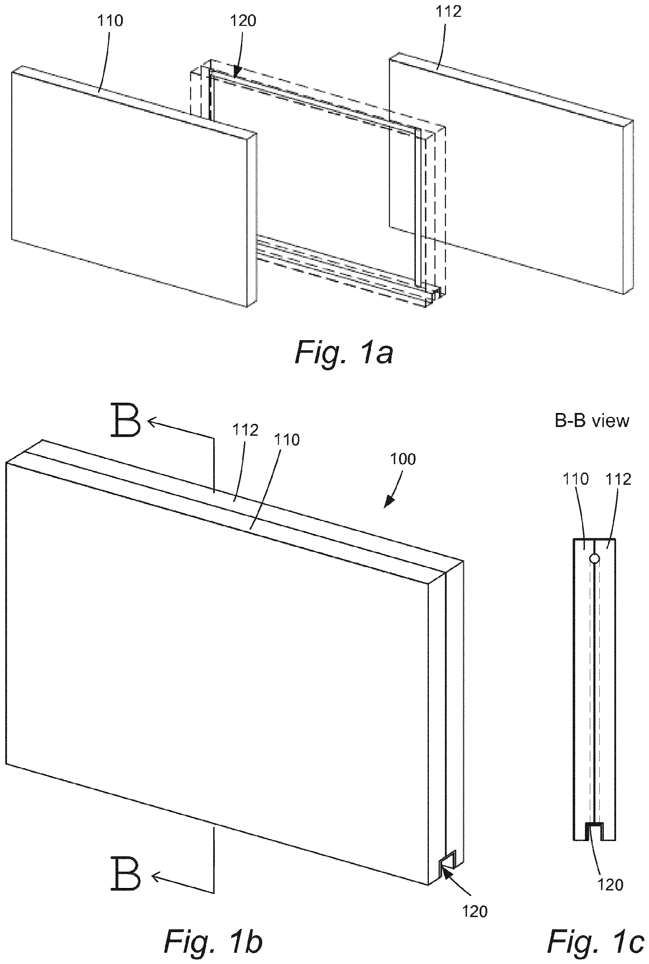

Fig. 1a is an isometric view showing three main components of a sound-absorbing panel 100. The panel comprises a rigid structure 120 as well as a first sheet 110 and a second sheet 112 arranged on opposite sides of the rigid structure 120.

The sheets 110, 112 comprise a sound-absorbing material. In one embodiment the material is nonwoven, such as a nonwoven fabric. Nonwoven fabric is a fabric-like material made from long fibers, bonded together by chemical, mechanical, heat or solvent treatment. The term is used to denote fabrics, such as felt, which are neither woven nor knitted. Nonwovens are engineered solutions made of a variety of materials including fibers, powders, particles, adhesives, films and other similar materials.

In one embodiment the material making up the sheet may comprise natural fibers, polyester fibers, glass fibers, recycled textile fibers, bicomponent fibers, mineral wool, plastic foam, flame retardant fibers or the like. It is beneficial to have a sound-absorbing material which is flame retardant in order to cope with the high safety standards.

In one embodiment the sound-absorbing material comprises thermoplastic polymer resin such as polyethylene terephthalate (PET) fibers, which is used as a fabricating material for a PET bottle.

The material making up the sheet may comprise bicomponent fibers, or conjugate fibers. The bicomponent fiber may comprise two components, one component being a core and the other component being a cover, or a sheath, which surrounds the core. This configuration is mainly used in melt fibers with a sheath made from polymers with a low melting point around a core with a high melting point. When heated, the sheath will melt and the consequent cooling will bind the nonwoven structure.

In one embodiment the fibers used are preferably bicomponent fibers which are partly meltable, having a non-meltable core and a meltable outer layer. The melting temperature of the material in the sheet should preferably range between 100-150 C°, and more preferably around 110 C°. When using bicomponent fibers the melting temperature is referred to as a temperature where the meltable layers of the bicomponent fibers start to melt.

According to an embodiment, the fibers in the top layer in the bicomponent fiber comprise core-sheath polyester binder fibers. If less than 100 wt% of the fibers are core-sheath polyester binder fibers, the fibers in the top layer may also comprise fibers of polyester, or copolymers thereof. If present, the fibers of polyester, or copolymers thereof, have a melting point of more than 200°C, e.g. about 260°C. Similarly, also the melting point of the core of the core-sheath polyester binder fibers is higher than 200°C, e.g. about 260 °C. Further, the sheath of the core-sheath polyester binder fibers has a melting point of less than 200°C, e.g. about 110°C. The melting point of the polyester sheath may be lowered by co-polymerization with olefin groups, reducing the melting point significantly, e.g. to about 110 °C. Preferably, the melting point of the sheath of the core-sheath polyester binder fiber is at least 50°C lower, such as at least 75°C lower, or even at least 100°C lower, than the melting point of the core. Similarly, the melting point of the sheath of the core-sheath polyester binder fiber is at least 50°C lower, such as at least 75°C lower or even at least 100°C lower, than the melting point of the fibers of polyester, or copolymers thereof, if present.

The polyester used may be PET (polyethylene terephthalate), PBT (polybutylene terephthalate), PTT (polytrimethylene terephthalate), PLA (polylactic acid) or PEF (polyethylene furanoate). In order to provide specific properties, such as low melting point for thermal bonding, improved fire retardant properties, increased elasticity and recovery after deformation etc., the polyester may be a co-polymer, such as block co-polymer. As an example, a block co-polymer comprising polyester and polyolefin blocks has a lower melting point compared to the corresponding polyester. Further, the polyester compound may comprise additives and/or additional polymers to provide the compound with specific properties.

The bicomponent fiber may be constructed by a variety of substances and the following are merely examples: polyester core (250°C melting point) with copolyester sheath (melting points of 110°C to 220°C), polyester core (250°C melting point) with polyethylene sheath (130°C melting point) and polypropylene core (175°C melting point) with polyethylene sheath (130°C melting point).

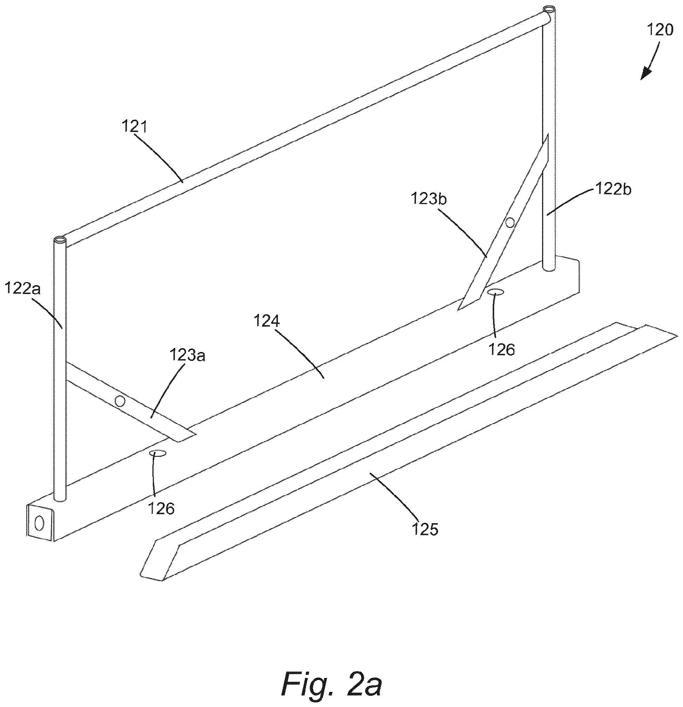

The rigid structure 120 is a structure having a high thermal conductivity. Hence, when the rigid structure 120 is heated the thermal energy is stored in the material for a long time. The benefits of this feature will be apparent during the following detailed description. According to the invention the rigid structure 120 is a metal structure. The metal may aluminum, zinc, copper, carbon steel, iron or a combination thereof. The rigid structure 120 is discussed in greater detail in accordance with Figs. 2a-c.

The basic idea of the manufacturing method of a sound-absorbing panel 100 is shown in Figs. 1a-c. The rigid structure 120 is heated to a temperature, wherein this temperature is above or well above the melting temperature of the material making up the sheets 110, 112.

As seen in Fig. 1a, the first and the second sheet 110, 112 are placed at both sides of the heated rigid structure 120. The heat from the rigid structure 120 will cause the fibers in the sheets 110, 112 to melt. The melted fibers can be seen as a bonding film which joins the rigid structure 120 and the sheets 110, 112 into a unity. This sandwich formed unity, i.e. the sound-absorbing panel 100, is shown in its assembled form in Figs. 1b-c. To further increase the bond between the sheets 110, 112 and the rigid structure 120 the panel 100 is put under pressure.

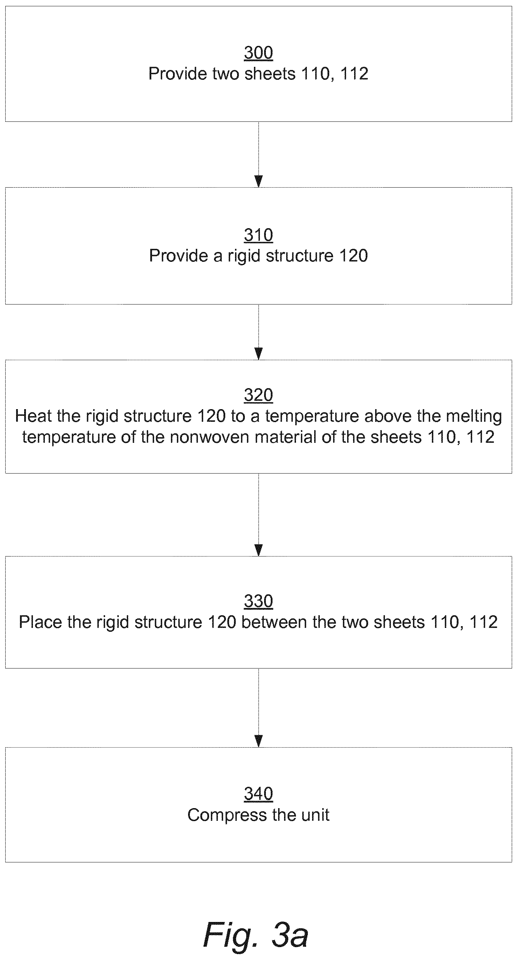

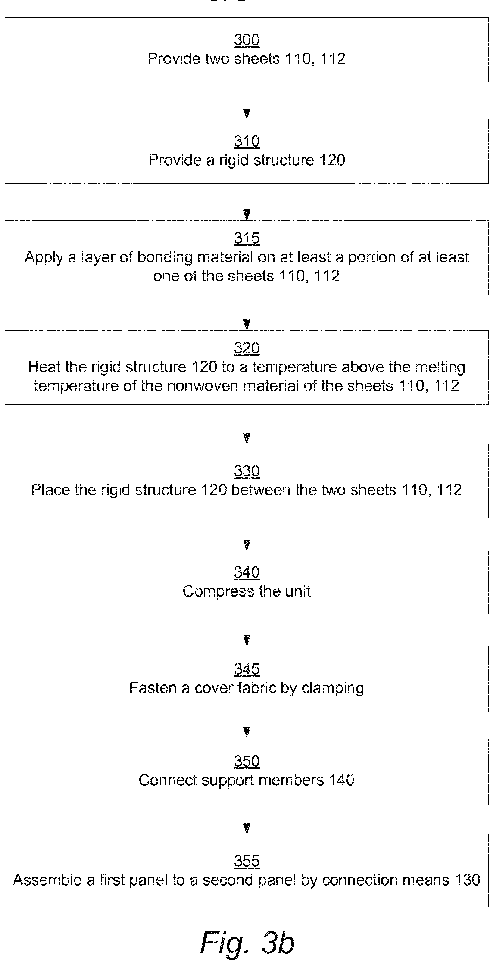

Details of the manufacturing method of a sound-absorbing panel will be disclosed with reference to Figs. 3a-b.

Figs. 2a-c show different perspective views of an embodiment of the rigid structure 120. The rigid structure 120 comprises two vertically extending members 122a, 122b and two horizontally extending members 121, 124. The four members 122a, 122b, 121, 124 are arranged to form a rectangular shaped rigid structure 120.

Preferably, the rigid structure is in the form of a frame-like structure formed by the horizontally and vertically extended members 122a, 122b, 121, 124. The frame-like structure thus permits contact between large areas of the two nonwoven sheets 110, 112 during assembly of the panel.

More generally, a rigid structure within the context of the present disclosure can be seen as a frame-like structure formed by a plurality of elongated members being interconnected to form a polygonal shape, such as a triangle, a rectangle, a pentagon, etc. The elongated members may be made of metal or other durable material(s) and may be hollow or solid.

The members of the structure 120 can be anchored to one another by welding or being fixated by means of rivets or screws. The attachment may be in or adjacent to each end of the members or somewhere along the side of the members.

The members 121, 122a, 122b, 124 may be in the form of tubes or flat bars and may be constructed in any material suitable for heating, such as different kinds of metal. If the members 121, 122a, 122b, 124 are in the form of a tube member any arbitrary cross section can be used, such as for example round, square and triangular. When a hollow tube member is used it is possible to use the created cavity for different purposes. In one embodiment the hollowness in the members are used to store electrical cords for electrical appliances which may be used in close connection to the sound-absorbing panel 100. This may be beneficial for example in the case where a sound-absorbing panel 100 is arranged on top of a desk housing a computer, since electrical cords can be hidden inside the panel 100.

In the embodiment shown in Fig. 2a, the vertical members 122a-b and one of the horizontal members, herein after called the top member 121, are hollow tube members. These members have been welded together at each end to create a steady structure. The vertical members 122a-b are welded to one of the horizontal members, herein after called the base member 124, on their other sides.

To further increase the stability, two side members 123a, 123b may be provided. These side members are partly transversal interconnecting the vertical members 122a-b and the base member 124. Hence, the side member 123a interconnects the vertical member 122a and the base member 124, whereas the side member 123b interconnects the vertical member 122b and the base member 124.

The base member 124 comprises an indentation to be able to engage a rail member 125. The base member 124 and the rail member 125 are thus interlockable to each other. This clamping effect will be described later with reference to the method step 345, where a cover material may be clamped in placed using the base and rail members 124, 125.

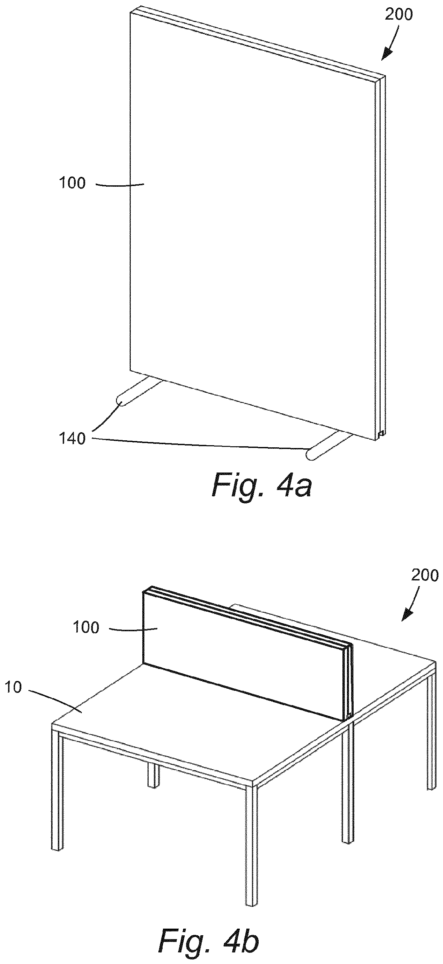

The base member 124 and the rail member 125 comprise through holes 126. These through holes 126 may be used to anchor the two parts together using screws or rivets. The though holes 126 may also be used in order to connect support members 140 (see Fig. 4a) to the rigid structure 120. Support members 140 may be needed for a panel 100 in order for it to stand in an upright position, for connecting it to the ceiling, connecting it to a table or to a wall. Such support members may thus be feet, an elongated base, ropes, wires, hooks etc. The support member 140 may be anchored to the rigid structure 120 by the use of the though holes 126 in the rail member and/or the though holes in the base member 124.

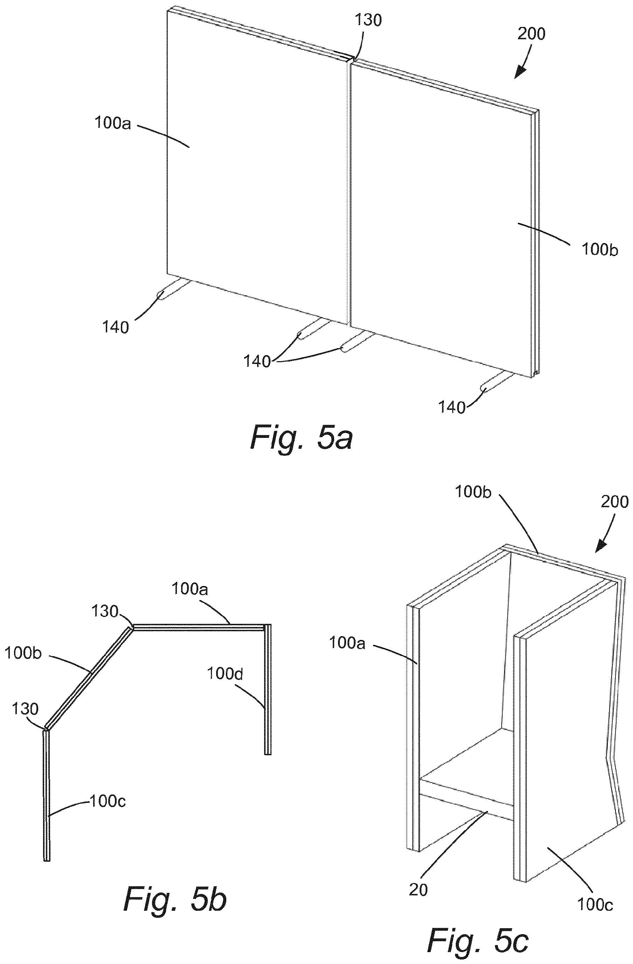

In order to connect one panel to another panel, connecting means 130 (shown in its connected state in Fig. 5a) may be used. The connecting means 130 are arranged to connect the rigid structure 120 of each panel 100 to each other.

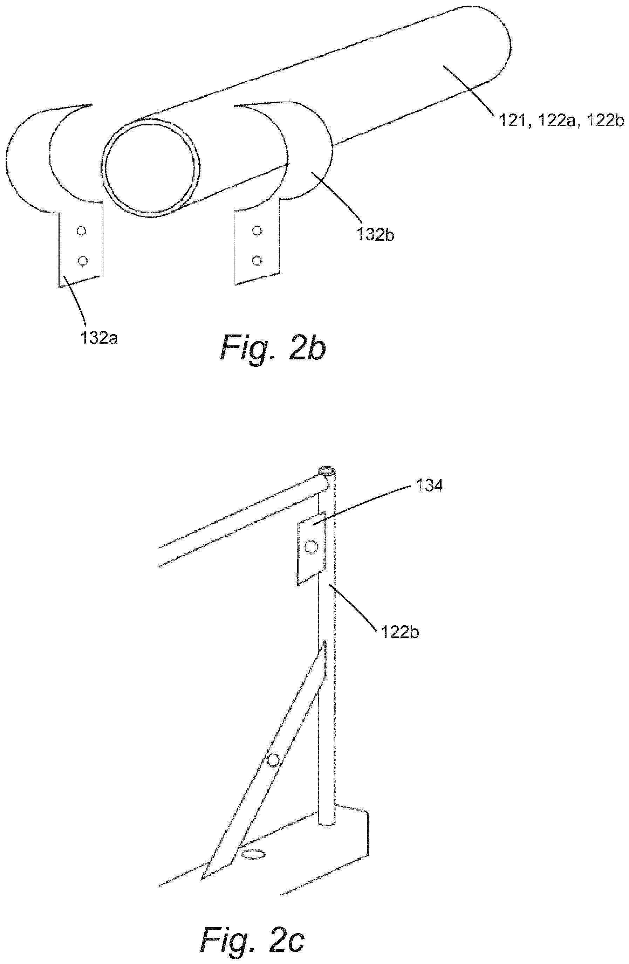

The connecting means 130 may comprise different types of anchoring points 132a, 132b, 134 as seen in Figs. 2b-c. Fig. 2b shows a movable anchoring point which comprises two interconnectable parts 132a, 132b. These parts 132a, 132b may be connected to a member of the rigid structure 120, such as for example the vertical members 122a, 122b or the top member 121. Once the preferred location of the parts is achieved, the parts may be locked together by screws or rivets. The anchoring point 132 may then be used to connect the rigid structure 120to an adjacent rigid structure of another panel.

Fig. 2c shows a securely fastened anchoring point which comprises a plate 134 having a through hole. The anchoring point is secured to a member of the rigid structure 120, such as the vertical members 122a, 122b or the top member 121, by welding. The anchoring point 134 may then be used to connect the rigid structure 120 to an adjacent rigid structure of another panel.

The rigid structure 120 of a panel 100 may use a plurality of connection means 130. In one embodiment the panel 100 is to be connected to four other panels, having one panel on each side of the center panel. Hence, the center panel will need connection means 130 on all four sides. One or a plurality of connection means 130 may be used on each side, depending on the dimensions of the panel 100.

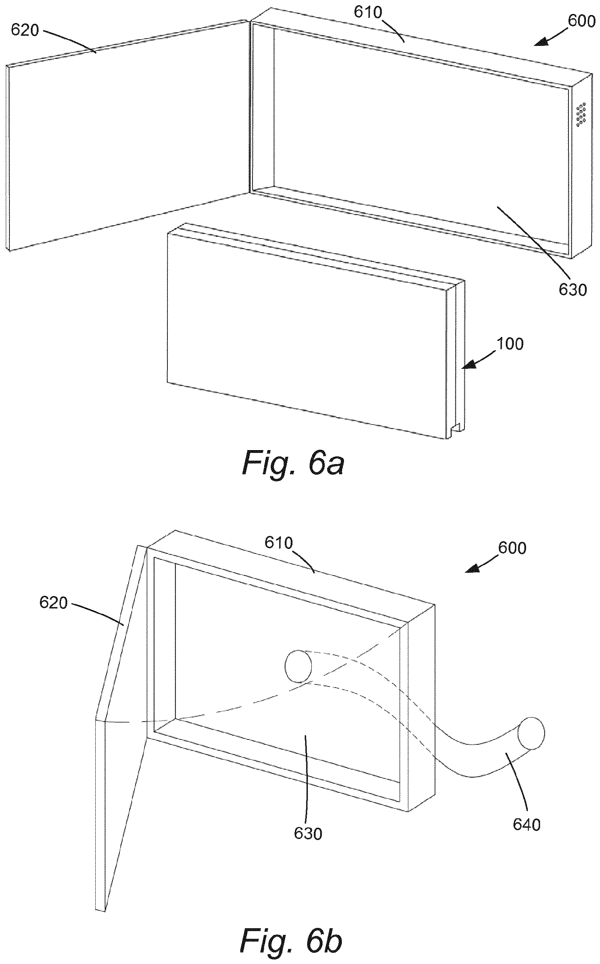

Different embodiments of a schematic representation of the manufacturing method are seen in Figs. 3a-b. The initial step is to provide, 300, a first sheet 110 and a second sheet 112 having a defined melting temperature. The sheets 110, 112 may be constructed by cutting out pieces of the sheet material in the desired dimensions. The sheets should be in a geometrical form that is adapted to fit a compression device 600 (see Figs. 6a-b) used in a later stage. For example, the sheets could be rectangular, circular or partly rounded.

The thickness of the first and the second sheets 110, 112 depends on the intended purpose of the panels. If the panel is to be used as a sound-absorbing partition panel or a panel system, the thickness for the whole panel may for example be between 30 - 50 mm. The individual sheets 110, 112 may thus have a thickness of 15-25 mm. However, if the panel is used as a part of a piece of furniture, the thickness may be different. If the panel is to be used as cushion, it is more comfortable the thicker the panel is but if the panel is used as a table top it may be sufficient to have a thinner panel.

In order to save production cost, it may be beneficial to have a first sheet 110 and a second sheet 112 that are identical to one another. However, in some applications it may be preferred that the first and second sheets 110, 112 are different from each other in for example thickness or material.

In addition to the two sheets 110, 112, one rigid structure 120 is provided, 310. In one preferred embodiment the rigid structure 120 is constructed with a material which can be heated to a high temperature without, such as a metal. The parts of the rigid structure 120 may, as already described in conjunction to Fig. 2a, be welded to each other in order to create high stability.

As an optional step, 315, a layer of adhesive may be applied to the sheets 110, 112. The adhesive layer or bonding film may be applied onto a surface which is intended to be faced towards the rigid structure 120. The adhesive layer may be applied to both the first and second sheet 110, 112 or to just one of them. Furthermore, the adhesive layer may be applied to the whole surface or to a smaller part of the surface of the sheet(s). The adhesive layer will further increase the strength of the panel.

The next step, 320, involves heating the rigid structure 120. The heating step may take place in a furnace, using hot air blowing or any other heating device suitable for heating the rigid structure 120, such as for instance a galvanic heating device operative to heat the rigid structure 120 by supplying electric current, or an inductive heating device operative to heat the rigid structure 120 by an alternating magnetic field. The rigid structure 120 is heated to a temperature above the melting point of the material of the sheets 110, 112.

The temperature to be used in the heating step depends on the material of the sheets. It should be sufficient to melt the binder portion of the bicomponent binder fiber, e.g. the sheath of a sheath-core fiber, but not another portion, e.g. the core of a sheath-core fiber. In one embodiment, the temperature used in the heating step may thus be in the range of 160-210°C and preferably in the range of 170-180°C. The heating time depends on the material of the rigid structure 120 and the material of the sheet. Due to the construction of the rigid structure 120 there is no upper limit on how long the rigid structure 120 could be heated.

The temperature and heating time need to be sufficient so as when the operator removes the rigid structure 120 from the heating device and places it between the two sheets 110, 112, the temperature should still be above the melting temperature of the material making up the sheets 110, 112. Either the operator heats the rigid structure 120 just above the melting temperature and directly places the rigid structure 120 between the sheets 110, 112, or the structure 120 is heated to well above the melting temperature so that the operator has more time before the structure 120 needs to be placed between the sheets 110, 112.

It is important to note that only the rigid structure 120 is heated in or by the heating device. The sheets 110, 112 are thus not heated in or by the heating device but, as will be seen in the subsequent step, the sheets 110, 112 will be indirectly heated by the heat transfer, e.g. heat conduction and/or heat radiation, from the rigid structure 120.

In the following step, 330, the heated rigid structure 120 is hence placed between the first sheet 110 and the second sheet 112. The material of the first and second sheets 110, 112 proximate to the rigid structure 120 will melt by heat transfer from the rigid structure 120, so that a unit comprising the first and second sheets 110, 112 and the rigid structure 120 is formed. Due to the structure of the bicomponent fibers, the outer layer of the fibers being proximate to the heated rigid structure 120 will begin to melt. Once the outer layer of the fibers melts, the fiber opens up and make them receptive to the rigid structure 120. The subsequent cooling of the material in the sheets 110, 112 will bind the nonwoven structure together with the rigid structure 120.

The next step, 340, involves compressing the unit comprising the first and second sheets 110, 112 and the rigid structure 120. The compression step further increases the bonding between the parts of the unit. The pressure applied may be in the range of 0.5-1.1 Pa and preferably in the range of 0.7-0.9 Pa. Since the unit is bonded together before the compression, the pressure applied can be lower than in prior art systems. This is beneficial for example due to the decrease in power consumption and thus the smaller environmental impact.

The pressure may be applied mechanically or by applying vacuum. In one embodiment, as will be described further with reference to Figs. 6a-b, the compression device comprises vacuum generating means.

As an optional step, 345, a cover fabric is fastened. In some situations it is preferred to enhance the aesthetic appearance of the panel by covering the fiber material, which is intended to form an outward facing surface, by a cover fabric. A cover fabric protects the fiber material as well as increases the appearance of the panel 100. The cover fabric may be constructed by any kind of natural fabric such as cotton, wool, silk or synthetic materials such as polyester, acrylic, aramid, nylon or the like.

The cover fabric may be fastened to the panel 100 in the conventional way of using glue or stapling. However, the rigid structure 120 allows for a more preferred and novel way of fastening the cover fabric. In one embodiment, the cover fabric is clamped to the unit by folding the cover fabric into the base member 124. The fabric is kept in place by anchoring the base member 124 to the rail member 125.

For the ease of understanding, Figs. 1-2 and 4-6 are shown without a covering fabric since it would hide the underlying structure of the two sheets 110, 112 and the rigid structure 120.

As a further optional step, 350, support members 140 are attached to the rigid structure 120. As has been discussed in conjunction to Fig. 2a, attaching support members 140 (Fig. 4a) may be relevant depending on the intention of the sound-absorbing panel, i.e. is the panel to be used as a stand-alone panel, as a panel used in the ceiling, panel standing on a table or a desk, or as a part of a piece of sound-absorbing furniture.

The support members 140 may be different kinds of support such as for example feet making the panel or furniture able to stand, an elongated support member to connect a table or desk to a panel or support members arranged as a hook capable of receiving a rope or wire when arranging a panel in the ceiling. However, it should be noted that if the panel is thick enough, it may be able to stand in a secure upright position without the use of support members 140.

If the use of support members 140 is preferred, the one or more support members 140 are connected to the rigid structure 120. In one embodiment, the support members are attached to the base member 124 and the rail member 125 of the rigid structure. The base member 124 and the rail member 125 comprise though holes 126 corresponding to each other, wherein the though holes 126 are suitable to receive a respective screw securing the support member 140 to the rigid structure 120.

In yet a further optional step, 355, a first panel 100a and a second panel 100b (see Fig. 5a) are assembled using connection means 130 arranged in the rigid structure 120. As already described in conjunction with Fig. 2, different connection means 130 could be used to create a panel system, a piece of furniture or a part of a furniture.

As is readily appreciated by a person skilled in the art, the manufacturing steps described above could be performed in a plurality of orders. For example, applying a bonding material in step 315 could be performed in conjunction to providing two sheets in step 300. Furthermore, fastening the cover fabric in step 345 could be performed after two panels have been connected by connection means in step 355. In yet another example, the step of connecting support members 350 could be the final step in the manufacturing method.

The sound-absorbing panel manufactured as described herein can be used for different purposes. The panel may be the final product or being a co-product to be used in a plurality of different sound-absorbing products. The products may for example be a piece of furniture, such as a chair, table, table top and the like, a sound-absorbing panel system comprising at least two connected panels or a single sound-absorbing panel. Different embodiments of sound-absorbing products will now be described with reference to Figs. 4a-b and Figs. 5a-c.

The sound-absorbing product 200 in the form of a single panel 100 may for example be used as a portable wall partition (as seen in Fig. 4a), a partition arranged on a table (as seen in Fig. 4b) or as a screen to be attached to walls or ceilings (not shown). In Fig. 4a the panel is used in a stand-alone fashion, i.e. not attached to other panels. As previously discussed, such a panel may be arranged with different support members 140. Here, the panel 100 is a stand-alone panel arranged with support members 140 in form of two feet in order to keep the panel 100 in a steady upright position.

In Fig. 4b the panel 100 is used as a sound-absorbing partition arranged on top of a table or a desk. Here the panel is arranged with support members 140 in form of an elongated base (not shown) adapted to be placed on a table. The elongated base will make the panel stand safely on top of a table while still permitting easy movement of the panel. To avoid the panel from being accidently turned over, the base may be wider at its middle than at its ends.

In another embodiment the panel may be extending below the table, such that it also cancels some noise coming from the under the table (e.g. sound coming from the chair). In such case, the support member 140 may be arranged so that the panel is attached to the table at its middle portion. The support member 140 may for example be arranged in the side members 123a, 123b of the rigid structure 120.

In some cases a single panel is not sufficient and a plurality of panels, preferably arranged as a system, is needed in order to create adequate sound isolation. As shown in Figs. 5a-b a sound-absorbing panel 100 is connected to one or more sound-absorbing panels in order to form a panel system 200. Such panel system 200 is beneficial when it is needed to divide a space into smaller sections and providing privacy and noise reduction.

The plurality of panels 100a-d are connected to each other by connecting means 130. The connecting means 130 permits different connection angles between the panels 100a-d. The plurality of panels 100a-d can be connected to each other at any connection angle, for example an angle of 90°, 120° or 180°.

In Fig. 5a two panels 100a, 100b are connected to each other to form a panel system 200. Here the panels 100a, 100b forming the panel system 200 are connected to form a straight partition panel system 200, i.e. with an angle of 180° between the two panels. In order to keep the panel 100 in a steady upright position, each panel is arranged with support members 140 in the form of two feet. However, as should be understood by a skilled person any number of feet 140 could be used. Furthermore, the support members 140 could be feet that are designed to connect the bottom corners of two panels, thus further securing the connection of the panels and making the standing panels more rigid in its structure. Hence, a single foot 140 may support both a corner of a panel 100a and an adjacent corner of a connected adjacent panel 100b.

In Fig. 5b the panel system 200 comprises four individual panels 100a-d interconnected to form a sound-absorbing workspace. Here the connection angles are 120° and 90°.

In yet another embodiment, sound-absorbing panels manufactured by the manufacturing method as described herein are used to create sound-absorbing furniture 200. Here, the panels 100 are merely a co-product which is used to produce the final product 200. The piece of furniture can be any kind of product that can be built from panels, such as a chair, a table top, a table, a sofa or the framework of a bed. One exemplary embodiment is shown in Fig. 5c.

Fig. 5c show seating furniture 200 in the form of a chair. The chair comprises three sound absorbing panels 100a-c used as the main construction pieces, as well as one seating member 20 constructed of another material. The rigid structure 120 in each panel is constructed in way to permit suitable connections with the surrounding panels and the seating member 20. The seat comprises a back panel 100b, and two side panels 100a, 100c which are arranged perpendicular to each other, at an angle of 90°.

The side panels 100a, 100c and/or the back panel 100b may be arranged with support structures 140 such as feet, but may also be standing directly on the floor/ground. Thicker panels will result in a more rigid product, which more easily can stand on its own.

In this embodiment the seating member 20 is constructed from an additional material not being manufactured by the method described herein. Such material may be a nonwoven fabric, woven fabric, leather, suede or any other soft comfortable material, possibly having a stable core member made of, for instance, wood, plastic or metal. However, it should be noted that the chair could be built entirely by sound-absorbing panels 100.

Another example of a piece of furniture, not shown, is a table top constructed by a sound-absorbing panel 100. Here the panel is connected to four legs, thus creating a table. The rigid structure is constructed in a way to permit the legs to be firmly attached by the use of support means 140 or connecting means 130.

Yet another example of a piece of furniture, not shown, is a table constructed mainly by sound-absorbing panels. The table comprises a table top panel and two side panels used as legs. The top panel is arranged perpendicular to the two side panels. The top panel is connected to the side panels by use of connecting means. The side panels may be arranged with support structures such as feet but may also be standing directly on the floor/ground.

Figs. 6a-b show two embodiment of a compression device 600 to be used in the in compression step 340 of the manufacturing method described herein. The compression device 600 comprises a housing 610 having a door 620 which can be in an open position and a closed position. The housing 610 has an inner cavity 630. The form of the inner cavity 630 is suitable for receiving the unit comprising the two sheets 110, 112 and the rigid structure 120 when the door has an open position. The form of the inner cavity 630 may be any geometrical shape depending on the form of the sound-absorbing panel 100 to be compressed therein. In one embodiment as shown in Fig. 6a, the cavity is formed as a cubiod or block, i.e. a polyhedron having six rectangular faces in order to fit the unit 100 comprising the two sheets 110, 112 and the rigid structure 120.

In one embodiment, not shown, the unit comprises sheets having a mainly rectangular sectional form with rounded edges, similar to an ellipse. In that case the compression device 600 may comprise an inner frame having the corresponding shape, which is arranged inside the cavity 630. The shape of the cavity 630 can thus easily be changed. It is important that the inner frame is in a robust material which will not change form during the compression of the unit 100.

Once the unit 100 is placed in the compression device 600, at least two sides of the unit 100 are fixated in the housing 610. Furthermore, if the compression device 600 is standing in an upright position as shown in the Figs. 6a-b, the weight of the unit will keep the panel 100 in an upright position.

The compression device 600 further comprises vacuum generating means 640 to remove air in the housing 610 after the sheets 110, 112 and the rigid structure 112 have been received therein and the door 620 has been closed. In one embodiment, once the air is removed from the cavity 630, the door 620 is pulled towards the cavity 630 by the generated underpressure and thus compresses the two sheets 110, 112 and the rigid structure 120 so as to form a panel. In another embodiment, once the air is removed from the cavity 630, the door 620 remains in its position but the underpressure inside said cavity 630 is still enough to compress the two sheets 110, 112 and the rigid structure 120 so as to form a panel.

A further inventive aspect is a compression device suitable for use in the in the step of compressing 340 the unit formed by the first sheet 110, the second sheet 112 and the rigid structure 120 in the method of manufacturing as described herein. The compression device comprises a housing 610 having a door 620, wherein said housing 610 has an inner cavity 630 which has a form suitable for receiving two sheets 110, 112 of a nonwoven material and a rigid structure 120 when the door 620 has an open position; and vacuum generating means 640 for removing air in the housing 610 after the sheets 110, 112 and the rigid structure 120 have been received therein and the door 620 has an closed position, thereby pulling the door 620 towards the cavity 630 and compressing the two sheets 110, 112 and the rigid structure 120 so as to form the unit.

The inner cavity 630 may be formed as a cubiod or block or any other geometrical shape depending on the shape of the sound-absorbing panel 100 to be manufactured.

Although the manufacturing method of sound-absorbing panels disclosed herein has been focused on a panel comprising two sheets and one rigid structure, the same method could be applied to a panel comprising two rigid structures and three sheets. This could be beneficial where the thickness of the sound-absorbing panel needs to be thick while still having a high degree of stability.

It should be appreciated that even though numerous characteristics and advantages of the present invention have been set forth in the foregoing description, together with details of the structure and function of the invention, the description is only illustrative and changes may be made in detail, especially in matters of shape, size and arrangement of parts within the scope of the invention to the full extent indicated by the appended claims.

## Claims

1. A method for manufacturing a sound-absorbing panel (100), comprising the steps of:
a) providing (300) a first sheet (110) and a second sheet (112) of a nonwoven material having a melting temperature;
b) providing (310) a rigid structure (120) in the form of a frame-like structure made of metal;
c) heating (320) only the rigid structure (120) to a temperature above the melting temperature of the nonwoven material of the two sheets (110, 112);
d) placing (330) the rigid structure (120) between the first sheet (110) and the second sheet (112), wherein the material of the first and second sheets (110, 112) proximate to the rigid structure will melt by heat transfer from the rigid structure (120) so that a unit is formed comprising the first sheet (110), the second sheet (112) and the rigid structure (120); and
e) compressing (340) the unit.

2. The method according to claim 1, further comprising:
prior to step b), applying (315) a bonding layer onto at least one portion of a surface, which is intended to be faced towards the rigid structure (120), of the first and/or second sheet (110, 112).

3. The method according to any proceeding claim, wherein
in step c), the rigid structure (120) is heated in a heating device to a temperature of approximately 160°C to 180 °C.

4. The method according to any proceeding claim, wherein
in step e) the compression is made by a compression device (600).

5. The method according to any preceding claim, wherein the rigid structure (120) comprises a base member (124) and a rail member (125) and wherein the method further comprises:
after step e), using (345) the rigid structure (120) for fastening a cover fabric by clamping the cover fabric between the base member (124) and the rail member (125).

6. The method according to any preceding claim, further comprising:
after step e), connecting (330) the sound-absorbing panel (100) to a second sound-absorbing panel by connecting means (130) arranged in the rigid structure (120).

7. The method according to any preceding claim, wherein the rigid structure (120) comprises means for connecting the panel (100) to a plurality of panels.

8. The method according to any preceding claim, wherein the rigid structure (120) comprises hollow members which are capable of receiving electrical cords.

9. The method according to any preceding claim, wherein the nonwoven material is a fabric comprising bicomponent fibers.

## Patentansprüche

1. Verfahren zum Herstellen eines schallabsorbierenden Paneels (100), das die folgenden Schritte umfasst:
a) Bereitstellen (300) einer ersten Platte (110) und einer zweiten Platte (112) eines Vliesmaterials, das eine Schmelztemperatur besitzt;
b) Bereitstellen (310) einer starren Struktur (120) in Form einer rahmenartigen Struktur, die aus Metall hergestellt ist;
c) Erwärmen (320) lediglich der starren Struktur (120) auf eine Temperatur über der Schmelztemperatur des Vliesmaterials der zwei Platten (110, 112);
d) Anordnen (330) der starren Struktur (120) zwischen der ersten Platte (110) und der zweiten Platte (112), wobei das Material der ersten und der zweiten Platte (110, 112) in der Nähe der starren Struktur durch Wärmeübertragung von der starren Struktur (120) derart schmilzt, dass eine Einheit gebildet wird, die die erste Platte (110), die zweite Platte (112) under die starre Struktur (120) umfasst; und
e) Komprimieren (340) der Einheit.

2. Verfahren nach Anspruch 1, das ferner Folgendes umfasst:
vor dem Schritt b) Aufbringen (315) einer Verbindungsschicht auf mindestens einen Teil einer Oberfläche, die dazu bestimmt ist, der starren Struktur (120) der ersten und/oder der zweiten Platte (110, 12) zugewandt zu sein.

3. Verfahren nach einem vorhergehenden Anspruch, wobei
in Schritt c) die starre Struktur (120) in einer Heizvorrichtung auf eine Temperatur etwa im Bereich von 160°C bis 180°C erwärmt wird.

4. Verfahren nach einem vorhergehenden Anspruch, wobei
in Schritt e) die Kompression durch eine Kompressionsvorrichtung (600) vorgenommen wird.

5. Vefahren nach einem vorhergehenden Anspruch, wobei die starre Struktur (120) ein Basiselement (124) und ein Schienenelement (125) umfasst und das Verfahren ferner Folgendes umfasst:
nach dem Schritt e) Verwenden (345) der starren Struktur (120) zum Befestigen eines Abdeckgewebes durch Einklemmen des Abdeckgewebes zwischen dem Basiselement (124) und dem Schienenelement (125).

6. Verfahren nach einem vorhergehenden Anspruch, das ferner Folgendes umfasst:
nach Schritt e) Verbinden (330) des schallabsorbierenden Paneels (100) mit einem zweiten schallabsorbierenden Paneel durch Verbindungsmittel (130), die in der starren Struktur (120) angeordnet sind.

7. Verfahren nach einem vorhergehenden Anspruch, wobei die starre Struktur (120) Mittel zum Verbinden des Paneels (100) mit mehreren Paneelen umfasst.

8. Verfahren nach einem vorhergehenden Anspruch, wobei die starre Struktur (120) Hohlkörper umfasst, die Elektrokabel aufnehmen können.

9. Verfahren nach einem vorhergehenden Anspruch, wobei das Vliesmaterial ein Stoff ist, der Zweikomponentenfasern umfasst.

## Revendications

1. Procédé de fabrication d'un panneau d'isolation phonique (100), comprenant les étapes de :
a) la fourniture (300) d'une première feuille (110) et d'une seconde feuille (112) d'un matériau non-tissé présentant une température de fusion ;
b) la fourniture (310) d'une structure rigide (120) sous la forme d'une structure de type cadre réalisée en métal ;
c) le chauffage (320) seulement de la structure rigide (120) à une température supérieure à la température de fusion du matériau non-tissé de deux feuilles (110, 112) ;
d) le placement (330) de la structure rigide (120) entre la première feuille (110) et la seconde feuille (112), dans lequel le matériau des premières et secondes feuilles (110, 112) à proximité de la structure rigide fusionnera par transfert thermique de la structure rigide (120) de sorte qu'une unité soit formée comprenant la première feuille (110), la seconde feuille (112) et la structure rigide (120) ; et
e) la compression (340) de l'unité.

2. Procédé selon la revendication 1, comprenant en outre :
avant l'étape b), l'application (315) d'une couche de liaison sur au moins une portion d'une surface, qui est destinée à être tournée vers la structure rigide (120), de la première et/ou seconde feuille (110, 112).

3. Procédé selon une quelconque revendication précédente, dans lequel
dans l'étape c), la structure rigide (120) est chauffée dans un dispositif de chauffage à une température d'approximativement 160 °C à 180 °C.

4. Procédé selon une quelconque revendication précédente, dans lequel
dans l'étape e), la compression est réalisée par un dispositif de compression (600).

5. Procédé selon une quelconque revendication précédente, dans lequel la structure rigide (120) comprend un élément de base (124) et un élément de rail (125) et dans lequel le procédé comprend en outre :
après l'étape e), l'utilisation (345) de la structure rigide (120) pour la fixation d'un tissu de revêtement par serrage du tissu de revêtement entre l'élément de base (124) et l'élément de rail (125).

6. Procédé selon une quelconque revendication précédente, comprenant en outre :
après l'étape e), le raccordement (330) du panneau d'isolation phonique (100) à un second panneau d'isolation phonique par un moyen de raccordement (130) agencé dans la structure rigide (120).

7. Procédé selon une quelconque revendication précédente, dans lequel la structure rigide (120) comprend un moyen pour le raccordement du panneau (100) à une pluralité de panneaux.

8. Procédé selon une quelconque revendication précédente, dans lequel la structure rigide (120) comprend des éléments creux qui sont aptes à recevoir des câbles électriques.

9. Procédé selon une quelconque revendication précédente, dans lequel le matériau non-tissé est un tissu comprenant des fibres à deux composants.
